# EUROPEAN PATENT APPLICATION

(11) **EP 3 462 415 A1**
(43) Date of publication of application: **03.04.2019**
(21) Application number: 17306302.5
(22) Date of filing: 29.09.2017
(51) Int. Cl.: G06T 9/00, G06T 17/00, G06T 5/00, H04N 19/86, H04N 19/597

(54) **METHOD AND DEVICE FOR MODIFYING ATTRIBUTES OF POINTS OF A 3D SCENE**

(71) Applicant: Thomson Licensing, 92130 Issy-les-Moulineaux (FR)
(72) Inventor: LASSERRE, SEBASTIEN, 35576 CESSON SEVIGNE CEDEX (FR); GUEDE, CELINE, 35576 CESSON SEVIGNE CEDEX (FR); CAI, KANGYING, 35576 CESSON SEVIGNE CEDEX (FR)
(74) Representative: Merlet, Hugues

(57) **Abstract**

A method and device for modifying attributes of one or more points of a 3D scene, the attributes comprising depth attribute and texture attribute stored respectively in a depth image and a texture image. To reach that aim, at least a first point of the 3D scene is identified, the at least a first point having depth information inconsistent with regard to depth information associated with a neighborhood of the at least a first point in the depth image. It is then determined whether the attributes of the at least a first point are correctable by analyzing neighborhood of the at least a first point in the depth image and in the texture image. For each first point having correctable attributes, the attributes stored in the depth image and/or texture image are modified according to the neighborhood in the depth image and/or in the texture image.

## Description

### 1. Technical field

The present disclosure relates to the domain of processing a 3D scene. Particularly, but not exclusively, the technical field of the present principles is related to the processing of points of a point cloud representing the geometry and texture of a 3D object. The technical field of the present principles may also relate to encoding/decoding of 3D image data that uses a texture and depth projection scheme.

### 2. Background

This section is intended to introduce the reader to various aspects of art, which may be related to various aspects of the present disclosure that are described and/or claimed below. This discussion is believed to be helpful in providing the reader with background information to facilitate a better understanding of the various aspects of the present invention. Accordingly, these statements are to be read in this light, and not as admissions of prior art.

It is well-known to represent a 3D object with a point cloud or a mesh.

A mesh comprises mesh elements (e.g. triangles) that are each represented with vertices and edges connecting the vertices. A mesh is usually intended to represent the external surface of the 3D object.

A point cloud is a set of points usually intended to represent the external surface of the 3D object but also more complex geometries like hair, fur that may not be represented efficiently by other data format like meshes. Each point of a point cloud is often defined by a 3D spatial location (*X, Y,* and Z coordinates in the 3D space) and possibly by other associated attributes such as a color, represented in the RGB or YUV color space for example, a transparency, a reflectance, a two-component normal vector, etc. A colored point cloud might be considered, i.e. a set of 6-component points (X, Y, Z, R, G, B) or equivalently (X, Y, Z, Y, U, V) where (X,Y,Z) defines the spatial location of a point in a 3D space and (R,G,B) or (Y,U,V) defines a color or texture of this point.

A point cloud may be represented with texture and depth projections, corresponding to an image-based point cloud representation.

Both texture and depth may be compressed before transmission to the end-user. Moreover, for better compression performance, and backward compatibility with standard video distribution workflows, the chroma of the texture may be down-sampled from the 4:4:4 format to the 4:2:0 format before compression. Together with chroma compression that tends to smooth chroma edges, this leads to strong chroma artifacts at the separation of two objects with distinct color. Therefore, when reconstructing the point cloud, some points near the edge of an object present inadequate color because their true color is averaged with the color of another part (located at the other side of the edge) of the object, which alters the viewing quality of 3D object.

Following depth compression, some points "at the edge" of the 3D object may be spatially located between a part of the 3D object and another part of the 3D object because a depth value may be averaged between these two parts, leading to points floating far from the true 3D object. This is due to the blurring/diffusion of depth that is unavoidable at low bit-rates when compressing the depth image. This generates visual artefacts when rendering the 3D object.

### 3. Summary

References in the specification to "one embodiment", "an embodiment", "an example embodiment", "a particular embodiment" indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

The present disclosure relates to a method of modifying attributes of one or more points of a 3D scene, the attributes comprising depth attribute and texture attribute stored respectively in a depth image and a texture image, the method comprising:
- identifying at least a first point of the 3D scene having depth information inconsistent with regard to depth information associated with a neighborhood of the at least a first point in the depth image;
- determining whether the attributes of the at least a first point are correctable by analyzing neighborhood of the at least a first point in the depth image and in the texture image;
- for each first point having correctable attributes, modifying the attributes stored in the depth image and/or texture image according to the neighborhood in the depth image and/or in the texture image.

The present disclosure also relates to a device/apparatus adapted to modify attributes of one or more points of a 3D scene, the attributes comprising depth attribute and texture attribute stored respectively in a depth image and a texture image, the device/apparatus comprising a memory associated with at least a processor configured to:
- identify at least a first point of the 3D scene having depth information inconsistent with regard to depth information associated with a neighborhood of the at least a first point in the depth image;
- determine whether the attributes of the at least a first point are correctable by analyzing neighborhood of the at least a first point in the depth image and in the texture image;
- for each first point having correctable attributes, modify the attributes stored in the depth image and/or texture image according to the neighborhood in the depth image and/or in the texture image.

The present disclosure also relates to a device/apparatus adapted to modify attributes of one or more points of a 3D scene, the attributes comprising depth attribute and texture attribute stored respectively in a depth image and a texture image, the device/apparatus comprising:
- means for identifying at least a first point of the 3D scene having depth information inconsistent with regard to depth information associated with a neighborhood of the at least a first point in the depth image;
- means for determining whether the attributes of the at least a first point are correctable by analyzing neighborhood of the at least a first point in the depth image and in the texture image;
- means for modifying the attributes stored in the depth image and/or texture image according to the neighborhood in the depth image and/or in the texture image, for each first point having correctable attributes.

According to a characteristic, the identifying comprises determining, in the depth image, which points, called second points, of the neighborhood of the at least a first point have a depth difference with regard to the at least a first point greater than a first determined value, the at least a first point being identified when the number of second points is greater than a second determined value.

According to a specific characteristic, the determining whether attributes are correctable comprises:
- determining, in the depth image, which points, called third points, of the neighborhood of the at least a first point have a depth difference with regard to the at least a first point less than a third determined value;
- determining, in the texture image, which points, called fourth points, of the neighborhood of the at least a first point are usable for modifying the attributes of the at least a first point;
the attributes being determined as correctable when the number of third points is greater than a fifth determined value, and when the number of fourth points is greater than or equal to 1.

According to another characteristic, the determining of the fourth points comprises determining, among the points of the neighborhood, called candidate fourth points, of the at least a first point in the texture image, which points, called fifth points, of the neighborhood of the candidate fourth points in the depth image have a depth difference with regard to the candidate fourth points lower than a fourth determined value, a candidate fourth point being a fourth point when the number of fifth points is greater than a sixth determined value.

According to a further characteristic, the attributes are modified based on the attributes of the at least one fourth point.

According to a further characteristic, the method comprises (the device is further configured for) adding the at least a first point having modified attributes to a list of points having attributes usable to modify attributes of a further point of the 3D scene identified as having depth information inconsistent with regard to depth information associated with its neighborhood in the depth image.

According to another characteristic, the depth image and the texture image are decoded from a received bitstream.

According to a further characteristic, the one or more points of the 3D scene are part of a point cloud.

The present disclosure also relates to a computer program product comprising instructions of program code for executing, by at least one processor, the abovementioned method of modifying attributes, when the program is executed on a computer.

The present disclosure also relates to a (non-transitory) processor readable medium having stored therein instructions for causing a processor to perform at least the abovementioned method of modifying attributes.

### 4. List of figures

The present disclosure will be better understood, and other specific features and advantages will emerge upon reading the following description, the description making reference to the annexed drawings wherein:
- figure 1 shows an example of a 3D object, in accordance with an example of the present principles;
- figures 2A and 2B shows examples of attributes image associated with the 3D object of figure 1, in accordance with a non-limiting embodiment of the present principles;
- figure 3 shows a first example for obtaining the attributes image of figures 2A and 2B, in accordance with a non-limiting embodiment of the present principles;
- figure 4 shows a second example for obtaining the attributes image of figures 2A and 2B, in accordance with a non-limiting embodiment of the present principles;
- figure 5 shows pixels of a depth image (or of a texture image) associated with points of the 3D object of figure 1, in accordance with a non-limiting embodiment of the present principles;
- figure 6 shows a method for modifying attributes of points of the 3D object of figure 1, in accordance with non-limiting embodiments of the present principles;
- figure 7 shows a method for identifying points of the 3D object of figure 1 that are candidate for attributes modification, in accordance with a non-limiting embodiment of the present principles;
- figure 8 shows a method for determining whether the attributes of a point of the 3D object of figure 1 that is a candidate for attributes modification can be modified, in accordance with a non-limiting embodiment of the present principles;
- figure 9 shows an example of an architecture of an apparatus for implementing the method(s) of figures 6, 7 and/or 8, in accordance with a non-limiting embodiment of the present principles;
- figure 10 shows an example of an encoding / decoding scheme of a point cloud representing the 3D object of figure 1, in accordance with an example of the present principles;
- figure 11 shows an example of a syntax of a signal transporting a bitstream obtained by the scheme of figure 10, in accordance with a non-limiting embodiment of the present principles;
- figure 12 shows an example of a process implemented in the encoding of a point cloud representing the 3D object of figure 1, in accordance with a non-limiting embodiment of the present principles; and
- figure 13 shows an example of a process for decoding a bitstream to obtain the decoded point cloud representing the 3D object of figure 1 object of figure 1, in accordance with a non-limiting embodiment of the present principles.

### 5. Detailed description of embodiments

The subject matter is now described with reference to the drawings, wherein like reference numerals are used to refer to like elements throughout. In the following description, for purposes of explanation, numerous specific details are set forth in order to provide a thorough understanding of the subject matter. It can be evident, however, that subject matter embodiments can be practiced without these specific details.

According to non-limitative embodiments of the present disclosure, a method and a device to modify the attributes of one or more points of a 3D object are disclosed.

In the following, an image contains one or several arrays of samples (pixel values) in a specific image/video format which specifies all information relative to the pixel values of an image (or a video) and all information which may be used by a display and/or any other device to visualize and/or decode an image (or video) for example. An image comprises at least one component, in the shape of a first array of samples, usually a luma (or luminance) component, and, possibly, at least one other component, in the shape of at least one other array of samples, usually a color component. Or, equivalently, the same information may also be represented by a set of arrays of color samples, such as the traditional tri-chromatic RGB representation.

In the following, a picture may be seen as an image, i.e. an array of samples, or as a collection of images.

A pixel value is represented by a vector of **nv** values, where **nv** is the number of components. Each value of a vector is represented with a number of bits which defines a maximal dynamic range of the pixel values.

The present principles will be described in reference to a particular embodiment of a method for (and an apparatus configured for) modifying attributes of one or more points of a three-dimensional (3D) object. Attributes are associated with the points of the point cloud, the attributes corresponding to texture information (texture attributes) and/or depth information (depth attributes). The depth (or distance) attributes are stored in a depth image, i.e. associated with the pixels of the depth image, and the texture (or color) attributes are stored in a texture image, i.e. associated with the pixels of the texture image. The one or more points (called first points) of the 3D object that are candidate for attribute modification (depth and/or texture) are identified. A point that is a candidate for attribute modification is a point having an associated depth attribute that is inconsistent in comparison to the depth information associated with the neighborhood of this candidate point in the depth image. The comparison between the depth attributes may be performed in the depth image, each pixel of the depth image being associated with one corresponding point of the 3D object. The neighborhood of an identified first point is analysed both in the depth image and the texture image to determine whether the attributes of this identified first point are correctable, i.e. whether there is reliable information in the depth and/or texture image that is usable to modify the attributes of the identified first point. When it has been determined that the attributes of the identified first point can be corrected, the attributes (depth and/or texture attributes) are modified using the neighborhood of this first point in the depth image and/or in the texture image.

The neighborhood of a point of the 3D object in the depth image (respectively texture image) corresponds to the pixels of the depth image (respectively texture image) located in the neighborhood of the pixel of the depth image (respectively texture image) that corresponds to said point of the 3D object. The neighborhood of a pixel may for example encompass all the pixels adjacent to said pixel without being limited to such an example. For example, the neighborhood may encompass the pixels adjacent to said pixel and all pixels adjacent to each pixel adjacent to said pixel, or even more.

Determining whether attributes are correctable or not enable to discard quickly points for which the attributes cannot be reliably corrected, thus sparing processing time and resources. The use of the depth image (instead of the 3D space of the 3D object) enables to quickly identify which points may be erroneous (e.g. which points may have a texture that does not correspond to the object the points belong to) and the use of both the depth image and the texture image enables to reliably determine which points may be used to correct the attributes of an identified first point (erroneous or dubious point).

Even if described with reference to a single pair of depth image and associated texture image of the 3D object, the present principles apply in a same way to a plurality of pairs of depth and associated texture images.

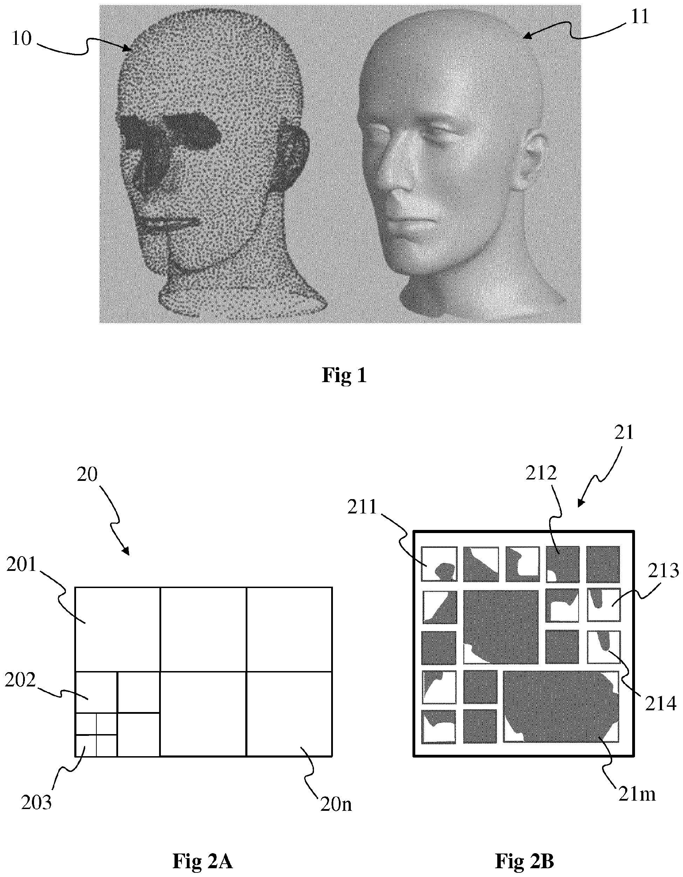

**Figure 1** shows two different representations of a 3D object, or part of it, according to a non-limiting embodiment of the disclosure. The 3D object may for example belongs to a 3D scene comprising a plurality of 3D objects. According to the example of figure 1, the object is a person, for example moving within the scene, and a part of the object corresponding to the head is illustrated in figure 1. Figure 1 may also illustrate a three-dimension (3D) model of an object 10 and a points of a point cloud 11 corresponding to 3D model 10. Model 10 may be a 3D mesh representation and points of point cloud 11 may be the vertices of the mesh. Points 11 may also be points spread on the surface of faces of the mesh. Model 10 may also be represented as a splatted version of point of cloud 11; the surface of model 10 being created by splatting the point of point of cloud 11. Model 10 may be represented by a lot of different representations such as voxels or splines. Figure 1 illustrates the fact that it is always possible to define a point cloud from a surface representation of a 3D object and reciprocally always possible to create a surface representation of a 3D object from a point of cloud. As used herein, projecting points of a 3D object (by extension points of a 3D scene) to an image is equivalent to projecting any representation of this 3D object to an object.

A first representation 10 of the part of the object is a point cloud. The point cloud corresponds to a large collection of points representing the object, e.g. the external surface or the external shape of the object. A point cloud may be seen as a vector based structure, wherein each point has its coordinates (e.g. three-dimensional coordinates XYZ, or a depth/distance from a given point of view) and one or more attributes, also called component. An example of component is the color component that may be expressed in different color spaces, for example RGB (Red, Green and Blue) or YUV (Y being the luma component and UV two chrominance components). The point cloud is a representation of the object as seen from a given point of view, or a range of point of views. The point cloud may be obtained of different ways, e.g.:
- from a capture of a real object shot by a rig of cameras, optionally complemented by depth active sensing device;
- from a capture of a virtual/synthetic object shot by a rig of virtual cameras in a modelling tool;
- from a mix of both real and virtual objects.

In the first case (from the capture of a real object), the set of cameras generates a set of images or sequences of images (videos) corresponding to the different views (different points of view). The depth information - meaning the distance from each camera center to the object surface - is obtained either by means of active depth sensing device, e.g., in infrared range and based on structured light analysis or time of flight, or based on disparity algorithms. In both cases, all cameras need to be calibrated, intrinsically and extrinsically. The disparity algorithms consist on a search of similar visual features on a pair of rectified camera images, typically to be made along a 1-dimension line: the larger the pixel column difference, the closer the surface of this feature. In the case of a camera array, the global depth information may be obtained from the combining of a plurality of peer disparity information, taking benefit of the plurality of camera pairs, therefore improving the signal over noise ratio.

In the second case (synthetic object), the modelling tool provides directly the depth information.

The point cloud 10 may be a dynamic point cloud that evolves with the time, i.e. the number of points may vary with the time and/or the location (e.g. at least one of the coordinates X, Y and Z) of one or more points may vary with the time. The evolution of the point cloud may correspond to the motion of the object represented by the point cloud and/or to any change of shape of the object or part(s) of the object.

The point cloud 10 may be represented in a picture or in one or more groups of temporally successive pictures, each picture comprising a representation of the point cloud at a determined time 't'. The one or more groups of temporally successive pictures may form a video representative of at least a part of the point cloud 10.

A second representation 11 of the part of the object may be obtained from the point cloud representation 10, the second representation corresponding to a surface representation. The point cloud may be processed in order to compute its surface. For that purpose, for a given point of the point cloud, the neighboring points of this given point are used in order to compute the normal to the local surface at this given point, the surface element associated with this given point being derived from the normal. The process is reiterated for all points to obtain the surface. Methods for reconstructing the surface from a point cloud are for example described by Matthew Berger et al. in "State of the Art in Surface Reconstruction from Point Clouds", State of the Art Report, 2014. According to a variant, the surface element associated with a given point of the point cloud is obtained by applying splat rendering to this given point. The surface of the object (also called implicit surface or external surface of the object) is obtained by blending all the splats (e.g., ellipsoids) associated with the points of the point cloud.

In a particular embodiment, the point cloud represents only partial views of the object, and not the object in its totality, and this corresponds to the way how the object is supposed to be watched at the rendering side, for example in a cinematographic scene. For example, the shooting of a character facing a flat camera array generates a point cloud on the side of the rig only. The back of the character does not even exist, the object is not closed on itself, and the geometric characteristics of this object is therefore the set of all the surfaces oriented in the direction of the rig (the angle between the normal of each local surface and the ray back to the acquisition device is for example less than 90°).

**Figures 2A and 2B** each shows a picture of the point cloud 10, according to specific non-limiting embodiments of the present principles.

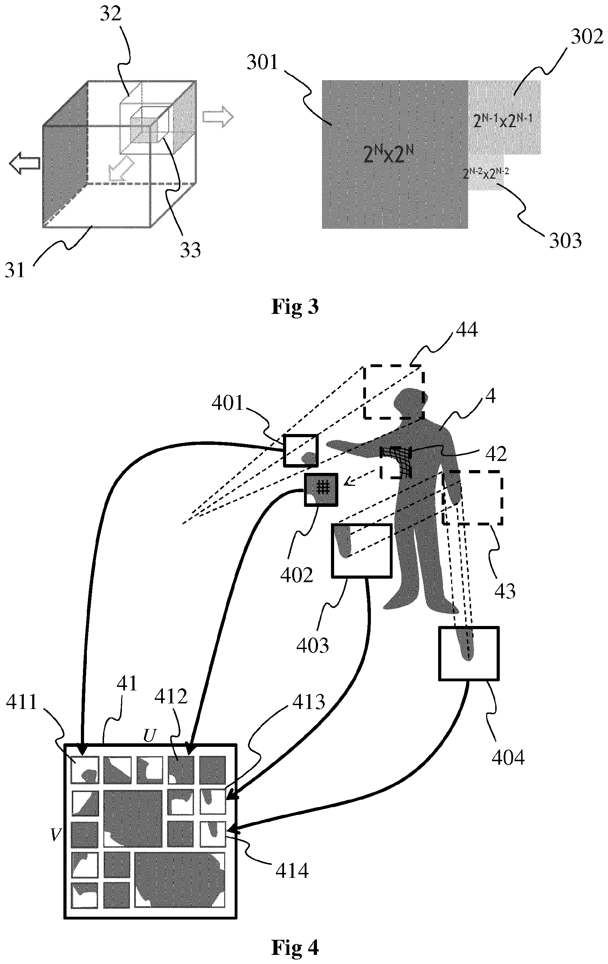

**Figure 2A** illustrates a first example of a picture 20 of the point cloud, for example a picture of a GOP (Group of Pictures) of the point cloud. The picture 20 is composed of a set of n images 201, 202, 203, 20n, n being an integer greater than or equal to 2. Each of the image 201 to 20n corresponds to an array of pixels, the size and/or the definition of which may vary from an image to another image. For example, the definition of the images 201 and 20n is the same while the definitions of images 202, 203 are different from each other and from the definition of the images 201 and 20n. In the example of figure 2A, the images 201 to 20n are spatially arranged to cover the whole picture 20 without overlap between the images. According to a variant, the images 201 to 20n do not cover the whole picture, a space existing between the images 201 to 202, or between at least some of them, i.e. the edges of two adjacent images may not be in contact. Data may be associated with each pixel of the images 201 to 20n, for example texture information and/or depth information. The texture information may for example be stored under the form of grey levels associated with each channel of a color space (e.g. RGB color space or YUV color space), the grey level for each channel being for example expressed with a first determined number of bits, e.g. 8, 10 or 12 bits. The depth information may for example be stored under the form of a value, for example in the α channel with a second determined number of bits, e.g. 8, 10 or 12 bits. Thus, four components RGBα or YUVα (e.g. four 10-bit channels) may for example be associated with each pixel in the picture 20 to represent the point cloud at a determined time 't'. According to a variant, a first picture 20 is used to store the texture information (e.g. 3 components RGB or YUV) and a second picture with the same arrangement of images is used to store the depth information, both pictures representing the point cloud at time 't'. The set of images forming the picture 20 may for example be obtained by projecting points of the point cloud according to projection(s), e.g. a different projection per first image, as illustrated on figure 3.

**Figure 3** illustrates a cube 31 bounding at least a part of the point cloud 10, according to a non-limiting example of the present principles.

The cube 31 is for example subdivided into 8 sub-cubes (only one sub-cube 32 of the 8 sub-cubes being shown for clarity purpose) at a first subdivision level. The sub-cube 32 is also subdivided into 8 sub-cubes (only one sub-cube 33 of the 8 sub-cubes being shown for clarity purpose) at a second subdivision level. At each subdivision level, a part of the points of the point cloud may be projected (e.g. according to an orthogonal projection) onto one or more faces of the cube(s) (e.g. the faces with grey filling). For example, points of the point cloud are projected onto the face 301 of the cube 31, onto the face 302 of the cube 32 and onto the face 303 of the cube 33. The faces are for example discretized to form arrays of pixels with definitions/sizes that depend on the subdivision level of the cube. For example, for a pixel of a face of a cube, the point of the point cloud that is projected onto said pixel corresponds to the point of the point cloud that is the closest from said pixel when tracing a ray from said pixel and orthogonal to the face comprising said pixel. The attributes associated with said pixel correspond to the attributes (texture and/or depth) of the point projected onto said pixel.

The face 301 is for example used to form the image 201, the face 302 to form the image 302 and the face 303 to form the image 303.

**Figure 2B** illustrates a second example of a picture 21 of the point cloud, for example a picture of a GOP of the point cloud. The picture 21 is composed of a set of m images 211, 212, 213, 214, 21m, m being an integer greater than or equal to 2. The arrangement of the images 211 to 21m may be different from the one of picture 20 with for example free space between the images 211 to 21m. The images 211 to 21m may have varied sizes and/or definitions. Each picture may receive attributes from the points of the point cloud, said attributes being associated with at least some of the pixels of each image 211 to 21m. For example, the part of each image that receives attributes from the point cloud is shown as a grey area while the part of the image that does not receive attributes from the point cloud is shown as a white area, said white area may be filled with default value, like the free space between images. Just like for the picture 20 of figure 2A, the data associated with the pixels of the images 211 to 21n may correspond to texture information and/or depth information. In a variant, a first picture 21 is used to store the texture information (e.g. 3 components RGB or YUV) and a second picture 21 with the same arrangement of images 211 to 21m is used to store the depth information, both pictures representing the point cloud at time 't'.

The set of images forming the picture 21 may for example comprise one or more first images and potentially one or more second images. The first image(s) (at least the grey area of each first image) may for example be obtained by projecting points of the point cloud according to first projection(s), e.g. a different first projection per first image, as illustrated on figure 4.

**Figure** 4 illustrates the obtaining of the first images of the set of images forming the picture 21, according to a non-limiting example of the present principles. The point cloud representing the 3D object 4 is partitioned into a plurality of 3D parts, e.g. 50, 100, 1000 or more 3D parts, 3 of them being illustrated on Figure 4, i.e. the 3D parts 42, 43 and 44, the 3D part 44 comprising points of the point cloud representing part of the head of the person (corresponding for example to the point cloud 10 of figure 1), the 3D part 42 comprising points of the point cloud representing an armpit of the person and the 3D part 43 comprising points of the point cloud representing a hand of the person. One or more images of each 3D part or of a part of the 3D parts are generated to represent each 3D part in two dimensions, i.e. according to a 2D parametrization. For example, a 2D parametrization 401 is obtained for the 3D part 44, a 2D parametrization 402 is obtained for the 3D part 42 and 2 different 2D parametrizations 403 and 404 are obtained for the 3D part 43. The 2D parametrization may vary from a 3D part to another one. For example, the 2D parametrization 401 associated with the 3D part 41 is a linear perspective projection while the 2D parametrization 402 associated with the 3D part 42 is a LLE and the 2D parametrizations 403 and 404 associated with the 3D part 43 are both orthographic projections according to different points of view. According to a variant, all 2D parametrizations associated with all 3D parts are of the same type, e.g. a linear perspective projection or an orthographic projection. According to a variant, different 2D parametrizations may be used for a same 3D part.

A 2D parametrization associated with one given 3D part of the point cloud corresponds to a browsing in 2 dimensions of the given 3D part of the point cloud allowing to sample the given 3D part, i.e. a 2D representation of the content (i.e. the point(s)) of this given 3D part comprising a plurality of samples (that may correspond to the pixels of a first image), the number of which depending from the sampling step that is applied. A 2D parametrization may be obtained in diverse ways, for example by implementing any one of the following methods:
- linear perspective projection of the points of the 3D part of the point cloud onto a plane associated with a point of view, the parameters representative of the linear perspective projection comprising the location of the virtual camera, the spatial sampling step and the field of view in the 2 dimensions;
- orthographic projection of the points of the 3D part of the point cloud onto a surface, the parameters representative of the orthographic projection comprising the geometry (shape, size and orientation) of the projecting surface and spatial sampling step;
- LLE (Locally-Linear Embedding) that corresponds to a mathematical operation of dimension reduction, here applied to convert/transform from 3D to 2D, the parameters representative of the LLE comprising the transformation coefficients.

Each image has advantageously a rectangular shape to ease the packing process on the picture 21.

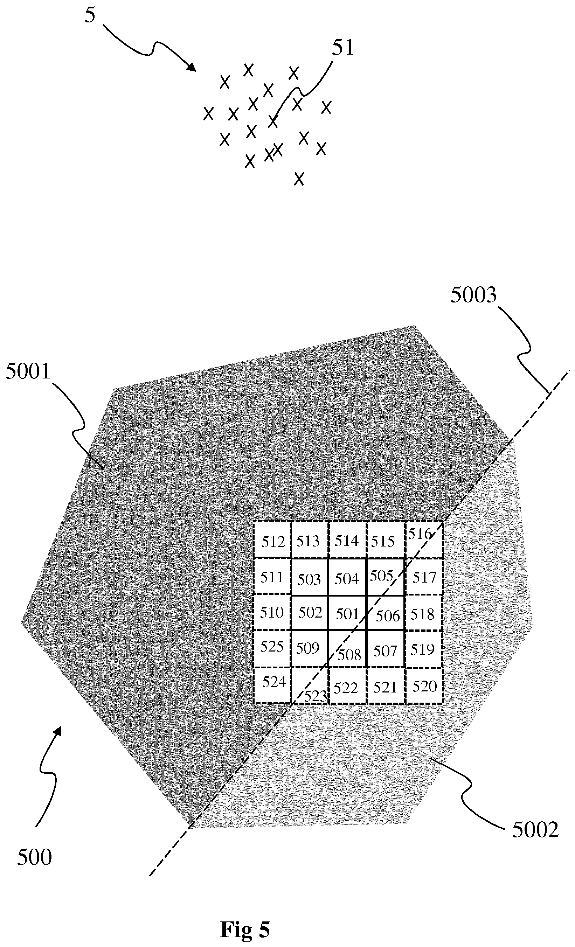

**Figure 5** shows the association between points of a 3D object and pixels of the depth map that is associated with the 3D object, according to a non-limiting example of the present principles. Figure 5 provides an example of a depth map but the same applies to a texture image that is associated with the 3D object. The only difference between a depth image associated with the 3D object and the texture image associated with the 3D object lies in the data that the depth and texture images contains. A depth image contains depth (distance) information (for each pixel of the depth image) while the texture image contains texture (color) information (for each pixel of the texture image). Figure 5 shows a set 5 of points comprising the point 51. The set 5 of points is for example a subset of the points of the point cloud 10 of figure 1 or a set of points of a 3D scene comprising at least a part of the 3D object 10, 11. A depth image 500 is associated with the 3D object, only a part of the depth image 500 being illustrated on figure 5, depth image corresponding generally to a rectangular image comprising an array of pixels. Two different areas 5001 and 5002 of the depth image 500 are illustrated on figure 5 with two different shades of grey. The first area 5001 is shown with a dark shade of grey while the second area 5002 is shown with a light shade of grey. The first area 5001 and the second area 5002 are separated from each other by an edge 5003 shown with a dashed line. The first area 5001 is for example associated with a first part of the 3D object and the second area with a second part of the 3D object, the first part being for example located in the foreground with regard to the second part. According to another example, the first area 5001 is associated with a first object of a 3D scene and the second area 5002 with a second object of the 3D scene that is located in the foreground with regard to the first object. For both examples, the depth information associated with the first area 5001 is different from the depth information associated with the second area 5002. When applied to a texture image, both previous examples imply that the texture information associated with the first area 5001 is different from the texture information associated with the second area 5002.

According to the example of figure 5, the point 51 of the set 5 of points is associated with the pixel 501 of the depth image 500. The neighborhood of the point 51 in the depth image 500 (respectively the texture image) corresponds to the pixels of the depth image (respectively the texture image) located in the neighborhood of the pixel 501 that corresponds to the point 51. The neighborhood of the pixel 501 may for example correspond to the set of pixels 502 to 509 that are adjacent to (and located around) the pixel 501. According to this example, the neighborhood corresponds to the pixels of a block of 9 pixels centered on the pixel 501, excluding the pixel 501, i.e. the neighborhood comprises the 8 pixels of the block surrounding the pixel 501. According to another example, the neighborhood of the pixel 501 comprises the pixels 502 to 509 that are adjacent to said pixel 501 with the pixels 510 to 525 adjacent to said pixels 502 to 509. According to this example, the neighborhood corresponds to the pixels of a block of 25 pixels centered on the pixel 501, excluding the pixel 501 i.e. the neighborhood comprises the 24 pixels of the block surrounding the pixel 501. According to another example, the neighborhood of the pixel 501 may correspond to a block of pixels comprising said pixel 501 but not centered on said pixel 501, for example the block of pixels comprising the pixels 501 to 518, or a superpixel of any shape comprising the pixel 501.

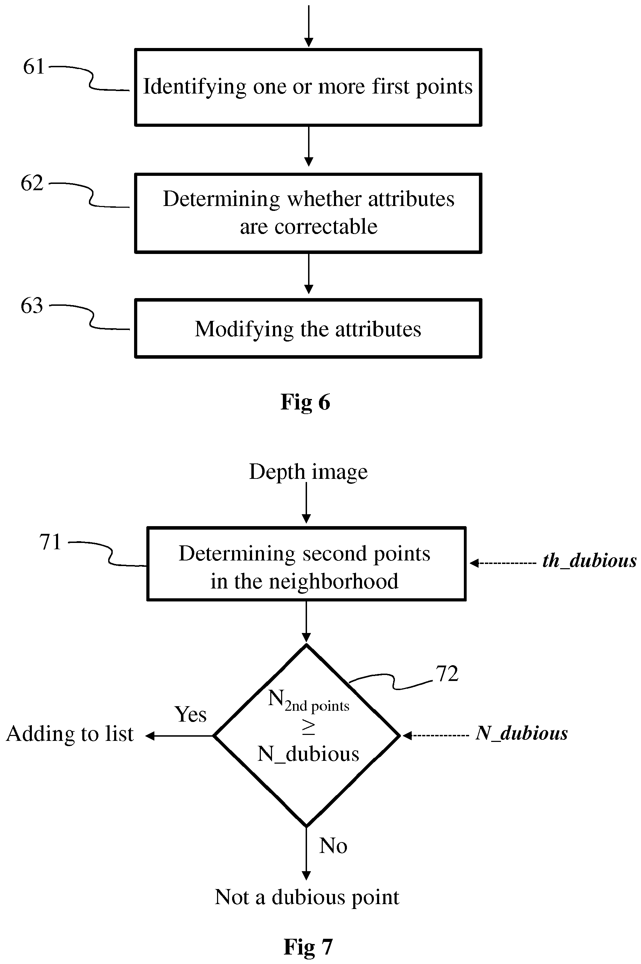

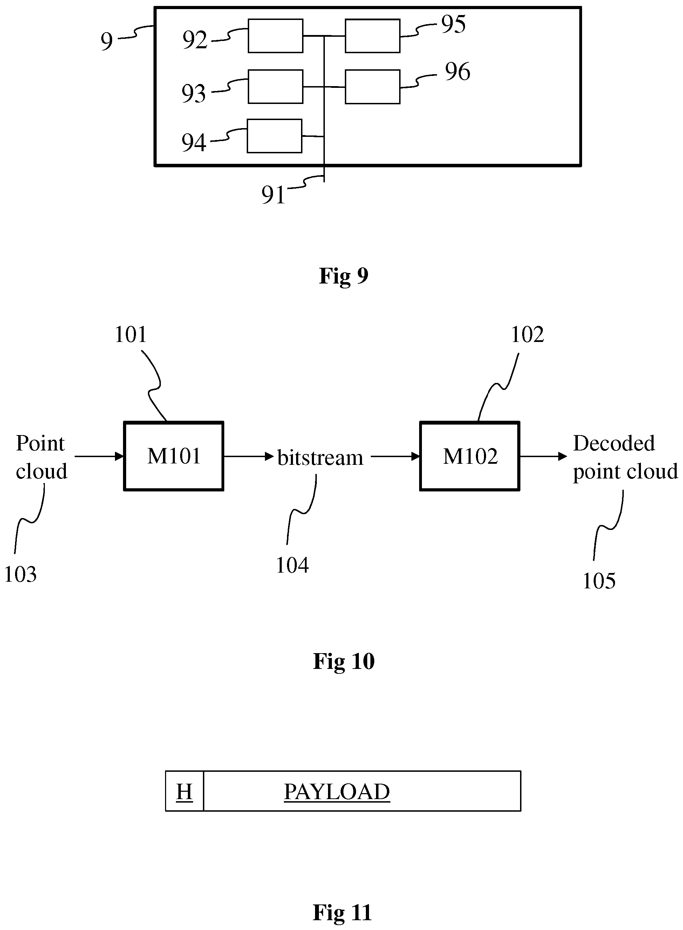

**Figure 6** shows a method of modifying attributes of point(s) of a 3D scene implemented for example in a device 9 (described with regard to figure 9), according to a non-restrictive embodiment of the present principles.

In a first operation 61, one or more points of the 3D scene (e.g. one or more points of the point cloud 10) are identified by analyzing the depth image associated with the 3D scene, or one of the depth images associated with the 3D scene when several depth images are associated with the 3D scene as described with regard to figures 2A, 2B and/or 4. The identified point(s) of the 3D scene are called first point(s). Each pixel of the depth image corresponds to one point of the 3D scene and comprises the depth information that is associated with the point of the 3D scene. To identify a first point of the 3D scene, the neighborhood of this first point in the depth image is analysed. The neighborhood of a point of the 3D scene in the depth image corresponds to the neighborhood of the pixel of the depth image that is associated with said point of the 3D scene, as explained with regard to figure 5. The identifying of the first point(s) aims at determining which points of the 3D scene are inconsistent with regard to their neighborhood in the depth image, the first points being also called dubious points as there is a doubt on the depth that is associated with each of these points. A false depth may for example be assigned to points which are located on or close to an edge between different objects or various parts of an object located at different depths, as in the example of figure 5 with the two areas 5001 and 5002 separated by the edge 5003. A first point (or dubious point) may be identified when its depth information (that is associated with its corresponding pixel in the depth image) is so different from the depth associated with its neighborhood that there is a doubt on the correctness of the depth information. A first point may for example be identified by comparing its depth information with the depth information associated with its neighborhood, a point being identified as being a first point when the difference between its depth information and the depth information of its neighborhood (e.g. the mean depth) is greater than a first determined value.

In a second operation 62, it is determined whether the attributes (i.e. the depth information and/or the texture information) of the first points identified during the operation 61 may be corrected or not. The determination is based on the analyzing of the neighborhood of each identified first point in the depth image and of the neighborhood of said each identified first point in the texture image. The neighborhood of a given first point of the 3D scene in the depth image refers to a set of points of the 3D scene and the neighborhood of said given first point of the 3D scene in the texture image refers to the same set of points of the 3D scene when both neighborhood comprise a same number of pixels located at a same location with regard to the pixels of the depth image and texture image corresponding to said given first point (e.g. a block of 9 pixels centered on (i.e. the 8 pixels surrounding) the pixel corresponding to said given first point in the depth image and in the texture image).

In a third operation 63, the attributes of a first point that have been determined as correctable during operation 62 are modified using the attributes of the neighborhood of said first point in the depth image and/or in the texture image. For said first point, the depth information may for example be modified by using the depth information of the neighborhood in the depth image and the texture information may be modified by using the texture information of at least one point of said first point in the texture image. The operation 63 may be reiterated for each first point having attributes that have been determined as correctable in the operation 62.

**Figure 7** shows a method of identifying one or more first points within the points of the 3D scene, according to a non-limiting embodiment of the present principles. The operation 61 may for example be based on the method of figure 7 for identifying the first points, called dubious points. The method of figure 7 will be described with regard to a current point of the 3D scene (i.e. with a current pixel of the depth image, the current pixel corresponding to the 3D point in the space of the depth image). Naturally, the operations applied to said current point may be applied to each point of the 3D scene or to at least a part of the 3D scene to identify the dubious points. For example, the operations of the method of figure 7 may be applied to all the pixels or part of the pixels of the depth image(s) associated with the 3D scene. For example, a sliding block of 9 or 25 pixels may be determined around each pixel of a plurality of pixels of the depth image to analyse to determine whether these pixels correspond to first points (dubious points) of the 3D scene. Description of the operations of the method of figure 7 will be described using the example of the point 51 and its corresponding pixel 501 of the depth image 500 of figure 5.

In a first operation 71, second points of the neighborhood of the point 51 in the depth image are determined. The neighborhood is for example defined as a block of pixels of the depth image 500 centered on the pixel 501 corresponding to the point 51, e.g. pixels 502 to 509 or pixels 502 to 525. A second point is determined in the neighborhood of the point 51 by comparing its depth information (stored in the depth image and associated with its corresponding pixel in the depth image) to the depth information of the point 51 (also stored in the depth image and associated with the pixel 501). The depth difference is compared with a first determined value, called *th_dubious,* and when the depth difference is greater than the first determined value the point of the neighborhood is determined as being a so-called second point. Practically, the depth information of each pixel 502 to 509 (respectively 502 to 525) is compared with the depth information of the pixel 501 and when the depth difference is greater than the first determined value, the corresponding point of the 3D scene is identified or labelled as second point. The first determined value may for example be equal to 5, 10, 20 or 50.

In a second operation 72, the second points determined during operation 71 are counted up and the number of second points *N_{2nd points}* is compared with a second determined value, called *N_dubious.* When the number of second points *N_{2nd points}* is greater than or equal to the second determined value *N_dubious,* then the point 51 is identified as being a first point, i.e. a dubious point. When the number of second points *N_{2nd points}* is less than the second determined value *N_dubious,* then the point 51 is identified as not being a first point, i.e. as being a point of the 3D scene for which the associated depth is consistent with its neighborhood and thus correct. The second determined value may for example depend on the number of points of the neighborhood that is considered for identifying the first point(s). For example, when the considered neighborhood comprises 8 points, the second determined value *N_dubious* may for example be equal to 2, 3 or 4. When the considered neighborhood comprises 24 points, the second determined value *N_dubious* may for example be equal to 5, 8 or 10.

When the point 51 has been identified as being a first point, the first point 51 may be added to a list comprising the identified first points of the 3D scene, the list being for example used for the following operations (e.g. the operation 62).

A first point corresponds to a point located at or close to an edge between two objects of the scene or between two different parts of a same 3D object of the scene. A first point may for example corresponds to the points of the 3D scene corresponding to the pixels 523, 509, 508, 501, 506, 505, 517 and 516. For these points 523, 509, 508, 501, 506, 505, 517 and 516, there might be a doubt on its depth and/or on its texture. For example, the depth associated with such a first point may correspond to value that is between the depth of the first area 5001 and the depth of the second area 5002. In a same way, the texture associated with such a first point may correspond to a mix of the texture associated with the first area 5001 and the texture associated with the second area 5002. Errors on depth and/or texture may for example appear due to errors generated when encoding the data of the 3D object and/or when decoding the data of the 3D objects.

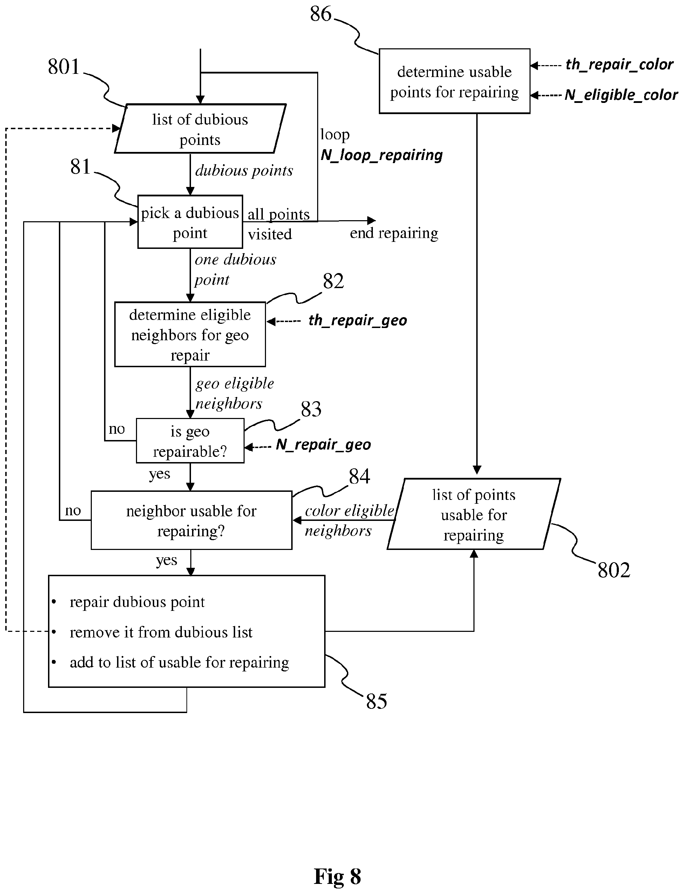

**Figure 8** shows a method for determining whether the attributes of a first point may be corrected, according to a non-limiting embodiment of the present principles. The operations 62 and 63 may for example be based on or comprise the operations of the method of figure 8.

In a first operation 81, a first point of the list 801 (that has been generated for example as described with regard to figure 7) is selected. The first point that is selected corresponds to a first point of the list that has not been processed yet. As an example, the first point that is selected corresponds to the first point 51.

In a second operation 82, it is determined, in the depth image, which points of the neighborhood of the selected first point 51 have a depth difference with regard to the selected first point 51 that is less than a third determined value, called *th_repair_geo.* The points of the neighborhood of the selected first point 51 fulfilling the latter inequality are called third points. To reach that aim, the neighborhood of the pixel 501 corresponding to the selected first point 51 is analysed. This neighborhood may be the same as the one used for identifying the first point (see for example operation 71). According to a variant, this neighborhood is different from the one used for identifying the first point. The depth information of each pixel of the neighborhood of the pixel 501 (e.g. pixels 502 to 509 or pixels 502 to 525) is compared with the depth information of the pixel 501 and when the depth difference is less than the third determined value, the corresponding point of the 3D scene is identified or labelled as a third point. The third determined value *th_repair_geo* may for example be equal to 3, 5 or 10. Determining the third points enable to identify which points of the neighborhood of the selected first point 51 have a high probability to belong to the same object of the 3D scene (or to the same part of the 3D object). According to the example of figure 5, the third points may correspond to the points corresponding to the pixels 509, 502, 503, 504 and 505 as the pixel 501 is located on the edge 5003 but at the side of the first area 5001 and pixels 509, 502, 503, 504 and 505 also belong to the first area 5001.

In a third operation 83, the third points 509, 502, 503, 504 and 505 determined during operation 82 are counted up and the number of third points *N_{third points}* is compared with a fifth determined value, called *N_repair_geo.* When the number of third points *N_{third points}* is greater than the fifth determined value *N_repair_geo,* then the point 51 is identified or labelled as having a geometry (depth information) that may be corrected or repaired, i.e. there are enough points in the neighborhood of the selected first point 51 that have a depth close enough to the depth of the first point 51, i.e. there are enough points of the neighborhood that may be used to correct or repair the depth and/or the texture of the point 51 if needed. In such a case, the selected first point 51 is further processed with the following operation 84.

When the number of third points *N_{third points}* is less than the fifth determined value *N_repair_geo,* then the point 51 is identified or labelled as having attributes that cannot be corrected or repaired and another first point is selected in the list 801, operations 82 and 83 being reiterated for this new selected first point.

The third determined value may for example depend on the number of points of the neighborhood that is considered for determining the third points. For example, when the considered neighborhood comprises 8 points, the third determined value *N_repair_geo* may for example be equal to 2 or 3. When the considered neighborhood comprises 24 points, the third determined value *N_repair_geo* may for example be equal to 5, 6, 7 or 8.

In a fourth operation 84, it is determined whether there is at least a point in the neighborhood of the selected first point 51 (in the case where the selected first point 51 has been identifying as being correctable in operation 83) that is usable for correcting/repairing the texture associated with the selected first point 51, such a point being called a fourth point. To reach that aim, it is determined whether one of the third points determined during operation 82 belongs to a list 802 of points usable for correcting the texture information of the selected first point 51. A point that is usable for correcting the texture information of a dubious point, i.e. a fourth point, is for example a point belonging to the same object (or to the same part of the object) (i.e. a point that is a third point, i.e. a point having a depth close to the depth of the dubious point) and which is not a dubious point itself (i.e. a point that is not on an edge). Among the third points determined at operation 82, i.e. third points 509, 502, 503, 504 and 505, the points 502, 503 and 504 may be eligible points that are usable for correcting the texture of the point 501 as the points 502, 503 and 504 are fully located in the first area 5001 and they are not located on the edge 5003.

When there is at least one point in the neighborhood of the selected first point 51 that is usable for correcting the attributes of the selected first point 51, then the selected first 51 point is further processed with operation 85. When there is no point in the neighborhood of the selected first point 51 that is usable for correcting the attributes of the selected first point 51, then the process ends and a further first point is selected from the list 81 to be processed with operations 82 to 84.

In a fifth operation 85, the attributes of the selected first point 51 are modified. For example, the depth attributes are modified by using the depth information associated with the third points 509, 502, 503, 504 and 505, for example by averaging the depth values associated with the third points 509, 502, 503, 504 and 505, the depth information being stored in the depth image. According to another example, the depth attributes are modified by using the depth attributes of the third points 502, 503 and/or 504, which belong to the list 802. The texture attributes of the selected first point 51 may also be modified, for example by using the texture information associated with the third point(s) 502, 503 and/or 504 comprised in the list 802, the texture information of these third points 502, 503 and/or 504 being stored in the texture image.

When the attributes of the selected first point 51 have been modified, i.e. repaired or corrected, the selected first point 51 is removed from the list 801 of dubious points and added to the list 802 of points usable for correcting the texture information of a further dubious point.

A further first point (dubious point) is then selected from the list 801 and the operations 81 to 85 may be reiterated for this further first point.

In an optional operation 86, points of the neighborhood of the selected first point 51 in the texture image are tested to check whether they are usable for correcting the attributes, e.g. the texture attributes, of the selected first point 51. Each point of the neighborhood of the selected first point in the texture image may be tested or only the third points identified at operation 82 are tested. The test performed for a point of the neighborhood of the selected first point 51 in the texture image aims at determining whether this point is usable for correcting the texture. For a candidate point of the neighborhood of the selected first point 51 in the texture image, it is determined which points of the neighborhood of this candidate point in the depth image have a depth difference with regard to the candidate point that is lower than a fourth determined value, called *th_repair_color.* The value of *th_repair_color* may be the same as the first determined value *th_dubious* or different from the first determined value *th_dubious.* A point of the neighborhood of this candidate point in the depth image having a depth difference with regard to the candidate point that is lower than a fourth determined value is called a fifth point.

The fifth points are counted up and the number of fifth points *N_{fifth points}* is compared with a sixth determined value, called *N_eligible_color.* The value of *N_eligible_color* may be the same as the second determined value *N_dubious* or different from the second determined value *N_dubious.* When the number of fifth points *N_{fifth points}* is greater than the sixth determined value *N_eligible_color,* then the candidate point is identified as being usable to correct the texture attributes of the selected first point 51 and this candidate point is added to the list 802. When the number of fifth points *N_{fifth points}* is less than the sixth determined value *N_eligible_color,* then the candidate point is identified as not being usable to correct the texture attributes and this candidate point is not added to the list 802.

According to a variant, the operation 86 is applied to the whole texture image to generate the list 802 before or in parallel to the operations 81 to 84.

**Figure 9** shows an example of an architecture of an apparatus 9 adapted to implement at least one of the methods described with regard to figures 6, 7 and 8, in accordance with a non-limiting embodiment of the present principles.

The apparatus 9 comprises following elements that are linked together by a data and address bus 91:
- a microprocessor 92 (or CPU), which is, for example, a DSP (or Digital Signal Processor);
- a ROM (or Read Only Memory) 93;
- a RAM (or Random-Access Memory) 94;
- a storage interface 95;
- an I/O interface 96 for reception of data to transmit, from an application; and
- a power supply, e.g. a battery.

In accordance with an example, the power supply is external to the device. In each of mentioned memory, the word « register » used in the specification can correspond to area of small capacity (some bits) or to very large area (e.g. a whole program or large amount of received or decoded data). The ROM 93 comprises at least a program and parameters. The ROM 93 may store algorithms and instructions to perform techniques in accordance with present principles. When switched on, the CPU 92 uploads the program in the RAM and executes the corresponding instructions.

The RAM 94 comprises, in a register, the program executed by the CPU 92 and uploaded after switching on of the apparatus 9, input data in a register, intermediate data in different states of the method in a register, and other variables used for the execution of the method in a register.

The implementations described herein may be implemented in, for example, a method or a process, an apparatus, a computer program product, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

The points of the 3D scene (e.g. points of a point cloud) and associated data/attributes (e.g. depth and texture of the points) are obtained from a source. For example, the source belongs to a set comprising:
- a local memory (93 or 94), e.g. a video memory or a RAM (or Random-Access Memory), a flash memory, a ROM (or Read Only Memory), a hard disk;
- a storage interface (95), e.g. an interface with a mass storage, a RAM, a flash memory, a ROM, an optical disc or a magnetic support;
- a communication interface (96), e.g. a wireline interface (for example a bus interface, a wide area network interface, a local area network interface) or a wireless interface (such as a IEEE 802.11 interface or a Bluetooth® interface); and
- a user interface such as a Graphical User Interface enabling a user to input data.

In accordance with examples of the decoding/rendering or decoder(s)/renderer(s), the decoded points or the reconstructed 3D scene is sent to a destination; specifically, the destination belongs to a set comprising:
- a local memory (93 or 94), e.g. a video memory or a RAM, a flash memory, a hard disk;
- a storage interface (95), e.g. an interface with a mass storage, a RAM, a flash memory, a ROM, an optical disc or a magnetic support; and
- a communication interface (96), e.g. a wireline interface (for example a bus interface (e.g. USB (or Universal Serial Bus)), a wide area network interface, a local area network interface, a HDMI (High Definition Multimedia Interface) interface) or a wireless interface (such as a IEEE 802.11 interface, WiFi ® or a Bluetooth ® interface).

In accordance with examples, the apparatus 9 is configured to implement a method described in relation with at least one of the figures 6 to 8, and belongs to a set comprising:
- a mobile device;
- a communication device;
- a game device;
- a tablet (or tablet computer);
- a laptop;
- a still picture camera;
- a video camera;
- an encoding chip;
- a server (e.g. a broadcast server, a video-on-demand server or a web server).
- a set top box;
- a TV set; and
- a display (such as a HMD for example).

**Figure 10** shows schematically a diagram of an encoding / decoding scheme of a 3D scene, e.g. a point cloud 103, according to a particular and non-limiting embodiment of the present principles.

The point cloud 103 is encoded into encoded data under the form of a bitstream 104 via an encoding process 101 implemented in a module M101. The bitstream is transmitted to a module M102 that implements a decoding process 102 to decode the encoded data to obtain a decoded point cloud 105. The modules M101 and M102 may be hardware, software or a combination of hardware and software.

The point cloud 103 corresponds to a large collection of points representing an object, for instance the external surface or the external shape of the object. A point cloud may be seen as a vector-based structure, wherein each point has its coordinates (e.g. three-dimensional coordinates XYZ, or a depth/distance from a given point of view) and one or more components. An example of component is the color component that may be expressed in different color spaces, for example RGB (Red, Green and Blue) or YUV (Y being the luma component and UV two chrominance components). The point cloud may be a representation of the object as seen from one or more points of view. The point cloud may be obtained of different ways, e.g.:
- from a capture of a real object shot by one or more cameras, optionally complemented by depth active sensing device;
- from a capture of a virtual/synthetic object shot by one or more virtual cameras in a modelling tool;
- from a mix of both real and virtual objects.

The point cloud 103 may be a dynamic point cloud that evolves with the time, i.e. the number of points may vary with the time and/or the location (e.g. at least one of the coordinates X, Y and Z) of one or more points may vary with the time. The evolution of the point cloud may correspond to the motion of the object represented by the point cloud and/or to any change of shape of the object or part(s) of the object.

The point cloud 103 may be represented in a picture or in one or more groups of temporally successive pictures, each picture comprising a representation of the point cloud at a determined time 't'. The one or more groups of temporally successive pictures may form a video representative of at least a part of the point cloud 103.

The encoding process 101 may for example implement intra-picture coding and/or inter-picture coding. Intra-picture coding is based on intra-picture prediction that exploits spatial redundancy, i.e. correlation among pixels within one picture, by calculating prediction values through extrapolation from already coded pixels for effective delta coding. Inter-picture coding is based on inter-picture prediction that exploits temporal redundancy. Temporally independently coded so-called intra pictures 'I' use only intra coding. The temporally coded predicted pictures 'P' (or 'B') may use intra- and inter-picture prediction.

The decoding process 102 may for example correspond to the inverse operations of the encoding process 101 to decode the data encoded with the encoding process.

**Figure 11** shows an example of the syntax of a signal transmitted for example between two remote devices, when the data are transmitted over a packet-based transmission protocol. Each transmitted packet P comprises a header H and payload data PAYLOAD.

According to embodiments, the payload PAYLOAD may comprise at least one of the following elements:
- bits that represent at least one picture representing the point cloud at a determined time t, e.g. the bits may represent texture information and/or depth information associated with the pixels of the at least one picture;
- bits that represent projection information data and the mapping between the projections and the images of the at least one picture.

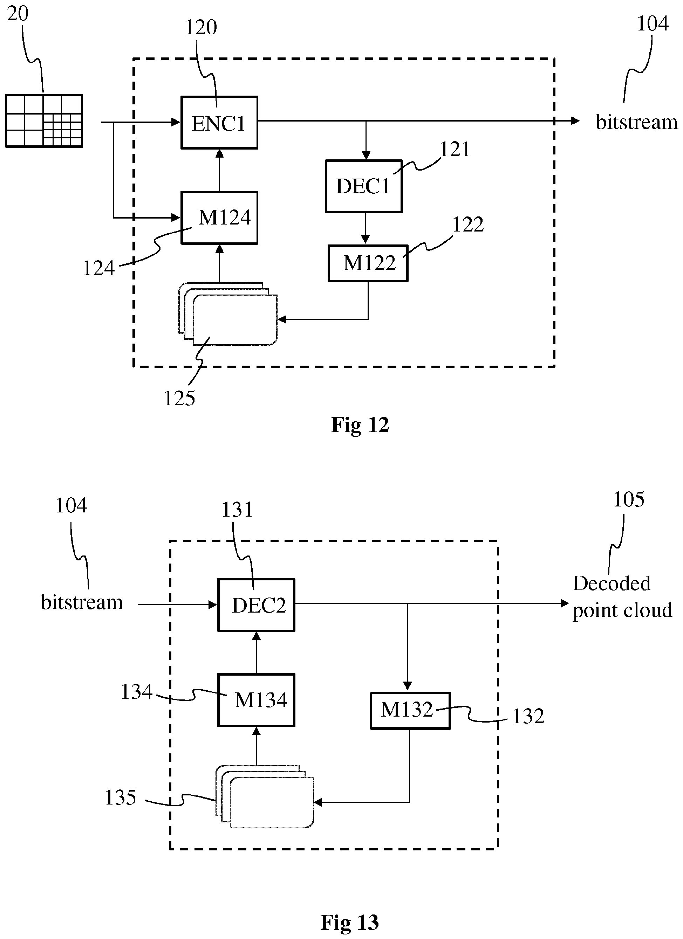

**Figure 12** shows operations for encoding the 3D scene, e.g. the point cloud 103, according to a particular and non-limiting embodiment of the present principles. The operations may be part of the encoding process 101 and may be implemented by the apparatus 9 of figure 9.

In an operation 120, data of a picture 20 of the point cloud is encoded by an encoder ENC1. The picture 20 is for example part of a group of pictures (GOP) and comprises data representative of the point cloud at a determined time 't'. The picture 20 may comprise a set of images, at least one of the images of the set comprising attributes that correspond to at least a part of the data of the picture 20. The attributes may be obtained by projecting, according to a determined projection, a part of the point cloud in each image, the attributes corresponding to the attributes of the points of the part of the point cloud projected onto said each image. The attributes may correspond to texture (or color) information and/or depth (or distance to a view point) information. The encoder ENC1 is for example compliant with a legacy encoder such as:
- JPEG, specification ISO/CEI 10918-1 UIT-T Recommendation T.81, https://www.itu.int/rec/T-REC-T.81/en ,
- AVC, also named MPEG-4 AVC or h264. Specified in both UIT-T H.264 and ISO/CEI MPEG-4 Part 10 (ISO/CEI 14496-10), http://www.itu.int/rec/T-REC-H.264/en,
- HEVC (its specification is found at the ITU website, T recommendation, H series, h265, http://www.itu.int/rec/T-REC-H.265-201612-I/en), or
- 3D-HEVC (an extension of HEVC whose specification is found at the ITU website, T recommendation, H series, h265, http://www.itu.int/rec/T-REC-H.265-201612-I/en annex G and I).

The encoded data of the picture 20 may be stored and/or transmitted in the bitstream 104.

In an operation 121, the encoded data of the picture 20 is decoded by a decoder DEC1. The decoder DEC1 is compliant with the encoder ENC1, for example compliant with a legacy decoder such as:
- JPEG,
- AVC, also named MPEG-4 AVC or h264,
- HEVC, or
- 3D-HEVC (an extension of HEVC).

The attributes, encoded at operation 120, are decoded and retrieved, at operation 121, for example stored in a buffer memory, for use in the generation of a reference picture 125 associated with the picture 20.

In an operation 122 implemented by a module M122, each image is processed as described with regard to figure 6, 7 and/or 8 to modify/correct the attributes of the dubious points that may for example result from the encoding/decoding processes 120, 121.

A reference picture 125 may be obtained from the corrected image(s) obtained from the module M122.

The reference picture 125 may be used in an operation 124, implemented by a module M124. The operation 124 comprises for example the generation of predictors for inter prediction for the coding of one or more pictures of the point cloud, different from the picture 20 (e.g. pictures of the point cloud at determined times different from the time 't' of picture 20). The point cloud 103, or pictures representing the point cloud, may then be encoded by referring to the reference picture 125. According to a variant, the module M124 is part of the encoder ENC1.

Naturally, a plurality of reference pictures may be obtained in a same way as the reference picture 125, each reference picture of the plurality being obtained from a specific picture representing the point cloud, the encoding of the point cloud 103 referring to one or several reference pictures.

**Figure 13** shows operations for decoding the encoded version of the point cloud 103 from the bitstream 104, according to a particular and non-limiting embodiment of the present principles. The operations may be part of the decoding process 102 and may be implemented by the apparatus 9 of figure 9.

In an operation 131, encoded data of one or more pictures (e.g. pictures of one or more GOPs or of an intra period) of the point cloud is decoded by a decoder DEC2 from a received bitstream 104. The bitstream 104 comprises the encoded data of the one or more pictures. Each picture comprises a set of images, at least one of the images of the set comprising attributes that correspond to at least a part of the data of the picture that has been encoded. The attributes may be obtained by projecting, according to a first projection, a part of the point cloud in each first image, the attributes corresponding to the attributes of the points of the part of the point cloud projected onto said each first image. The attributes may correspond to texture (or color) information and/or depth (or distance to a view point) information. The decoder DEC2 may correspond to the decoder DEC1 of figure 12 and is for example compliant with a legacy decoder such as:
- JPEG,
- AVC, also named MPEG-4 AVC or H264,
- HEVC, or
- 3D-HEVC (an extension of HEVC).

The attributes decoded at operation 131 are retrieved, for example stored in a buffer memory, for use in the generation of one or more reference pictures 135, each reference picture being associated with one picture. In the following, only one reference picture associated with one picture will be considered for clarity and conciseness purposes.

In an operation 132 implemented by a module M132 (that may be identical to the module M122 of figure 12), the decoded attributes are is processed as described with regard to figure 6, 7 and/or 8 to modify/correct the attributes of the dubious points that may for example result from the encoding/decoding processes 120, 131.

A reference picture 135 (that may be identical to the reference picture 125 of figure 12) may be obtained from the picture by fusing the decoded first attributes obtained from the operation 121 with the second attributes obtained from the operation 123. The reference picture may comprise the same structure than the picture, i.e. the same spatial arrangement of the set of images but with different data, i.e. with the decoded first attributes and the obtained second attributes. A detailed description of an example of a process to obtain the reference picture is provided hereinabove with the description of figure 9.

The reference picture 135 may be used in an operation 134, implemented by a module M134. The operation 134 comprises for example the generation of the predictors for inter prediction from the decoding of the encoded data comprised in the bitstream. These data, associated to the generation of the predictor, may comprise
- a prediction type, for instance a flag indicating if the prediction mode is intra or inter,
- a motion vector, and/or
- an index to indicate a reference picture from a list of reference pictures.

Naturally, a plurality of reference pictures may be obtained in a same way as the reference picture 135, each reference picture of the plurality being obtained from decoded data of a specific picture representing the point cloud, the decoding of the data of the bitstream 104 may be based on one or several reference pictures to obtain a decoded point cloud 105.

Naturally, the present disclosure is not limited to the embodiments previously described.

The present disclosure is not limited to a method of encoding and/or decoding a point cloud but also extends to a method and device for transmitting the bitstream obtained by the encoding of the point cloud and/or a method and device for receiving the bitstream obtained by the encoding of the point cloud. The present disclosure also extends to a method and device for rendering and/or displaying the decoded point cloud, i.e. images of the 3D object represented by the decoded point cloud, a point of view being associated with each image.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware. The methods may be implemented in, for example, an apparatus such as, for example, a processor, which refers to processing devices in general, including, for example, a computer, a microprocessor, an integrated circuit, or a programmable logic device. Processors also include communication devices, such as, for example, Smartphones, tablets, computers, mobile phones, portable/personal digital assistants ("PDAs"), and other devices that facilitate communication of information between end-users.

Implementations of the various processes and features described herein may be embodied in a variety of different equipment or applications, particularly, for example, equipment or applications associated with data encoding, data decoding, view generation, texture processing, and other processing of images and related texture information and/or depth information. Examples of such equipment include an encoder, a decoder, a post-processor processing output from a decoder, a pre-processor providing input to an encoder, a video coder, a video decoder, a video codec, a web server, a set-top box, a laptop, a personal computer, a cell phone, a PDA, a HMD (Head-Mounted Display), smart glasses and other communication devices. As should be clear, the equipment may be mobile and even installed in a mobile vehicle.

Additionally, the methods may be implemented by instructions being performed by a processor, and such instructions (and/or data values produced by an implementation) may be stored on a processor-readable medium such as, for example, an integrated circuit, a software carrier or other storage device such as, for example, a hard disk, a compact diskette ("CD"), an optical disc (such as, for example, a DVD, often referred to as a digital versatile disc or a digital video disc), a random access memory ("RAM"), or a read-only memory ("ROM"). The instructions may form an application program tangibly embodied on a processor-readable medium. Instructions may be, for example, in hardware, firmware, software, or a combination. Instructions may be found in, for example, an operating system, a separate application, or a combination of the two. A processor may be characterized, therefore, as, for example, both a device configured to carry out a process and a device that includes a processor-readable medium (such as a storage device) having instructions for carrying out a process. Further, a processor-readable medium may store, in addition to or in lieu of instructions, data values produced by an implementation.

As will be evident to one of skill in the art, implementations may produce a variety of signals formatted to carry information that may be, for example, stored or transmitted. The information may include, for example, instructions for performing a method, or data produced by one of the described implementations. For example, a signal may be formatted to carry as data the rules for writing or reading the syntax of a described embodiment, or to carry as data the actual syntax-values written by a described embodiment. Such a signal may be formatted, for example, as an electromagnetic wave (for example, using a radio frequency portion of spectrum) or as a baseband signal. The formatting may include, for example, encoding a data stream and modulating a carrier with the encoded data stream. The information that the signal carries may be, for example, analog or digital information. The signal may be transmitted over a variety of different wired or wireless links, as is known. The signal may be stored on a processor-readable medium.

A number of implementations have been described. Nevertheless, it will be understood that various modifications may be made. For example, elements of different implementations may be combined, supplemented, modified, or removed to produce other implementations. Additionally, one of ordinary skill will understand that other structures and processes may be substituted for those disclosed and the resulting implementations will perform at least substantially the same function(s), in at least substantially the same way(s), to achieve at least substantially the same result(s) as the implementations disclosed. Accordingly, these and other implementations are contemplated by this application.

## Claims

1. A method of modifying attributes of one or more points of a 3D scene, said attributes comprising depth attribute and texture attribute stored respectively in a depth image and a texture image, the method comprising:
- identifying at least a first point of said 3D scene having depth information inconsistent with regard to depth information associated with a neighborhood of said at least a first point in said depth image;
- determining whether the attributes of said at least a first point are correctable by analyzing neighborhood of said at least a first point in said depth image and in said texture image;
- for each first point having correctable attributes, modifying said attributes stored in the depth image and/or texture image according to the neighborhood in said depth image and/or in said texture image.

2. The method according to claim 1, wherein the identifying comprises determining, in said depth image, which points, called second points, of the neighborhood of said at least a first point have a depth difference with regard to said at least a first point greater than a first determined value, said at least a first point being identified when the number of second points is greater than a second determined value.

3. The method according to one of claims 1 and 2, wherein said determining whether attributes are correctable comprises:
- determining, in said depth image, which points, called third points, of the neighborhood of said at least a first point have a depth difference with regard to said at least a first point less than a third determined value;
- determining, in said texture image, which points, called fourth points, of the neighborhood of said at least a first point are usable for modifying the attributes of said at least a first point;
said attributes being determined as correctable when the number of third points is greater than a fifth determined value, and when the number of fourth points is greater than or equal to 1.

4. The method according to claim 3, wherein the determining of the fourth points comprises determining, among the points of the neighborhood, called candidate fourth points, of said at least a first point in said texture image, which points, called fifth points, of the neighborhood of the candidate fourth points in the depth image have a depth difference with regard to said candidate fourth points lower than a fourth determined value, a candidate fourth point being a fourth point when the number of fifth points is greater than a sixth determined value.

5. The method according to one of claims 3 and 4, wherein said attributes are modified based on the attributes of said at least one fourth point.

6. The method according to one of claims 1 to 5, further comprising adding said at least a first point having modified attributes to a list of points having attributes usable to modify attributes of a further point of said 3D scene identified as having depth information inconsistent with regard to depth information associated with its neighborhood in said depth image.

7. The method according to one of claims 1 to 6, wherein said depth image and said texture image are decoded from a received bitstream.

8. The method according to one of claims 1 to 7, wherein said one or more points of the 3D scene are part of a point cloud.

9. A device configured to modify attributes of one or more points of a 3D scene, said attributes comprising depth attribute and texture attribute stored respectively in a depth image and a texture image, the device comprising a memory associated with at least a processor configured to:
- identify at least a first point of said 3D scene having depth information inconsistent with regard to depth information associated with a neighborhood of said at least a first point in said depth image;
- determine whether the attributes of said at least a first point are correctable by analyzing neighborhood of said at least a first point in said depth image and in said texture image;
- for each first point having correctable attributes, modify said attributes stored in the depth image and/or texture image according to the neighborhood in said depth image and/or in said texture image.

10. The device according to claim 9, wherein the at least a processor is further configured to determine, in said depth image, which points, called second points, of the neighborhood of said at least a first point have a depth difference with regard to said at least a first point greater than a first determined value, said at least a first point being identified when the number of second points is greater than a second determined value.

11. The device according to one of claims 9 and 10, wherein, for determining whether attributes are correctable, the at least a processor is further configured to:
- determine, in said depth image, which points, called third points, of the neighborhood of said at least a first point have a depth difference with regard to said at least a first point less than a third determined value;
- determine, in said texture image, which points, called fourth points, of the neighborhood of said at least a first point are usable for modifying the attributes of said at least a first point;
said attributes being determined as correctable when the number of third points is greater than a fifth determined value, and when the number of fourth points is greater than or equal to 1.

12. The device according to claim 11, wherein the at least a processor is further configured to determine, among the points of the neighborhood, called candidate fourth points, of said at least a first point in said texture image, which points, called fifth points, of the neighborhood of the candidate fourth points in the depth image have a depth difference with regard to said candidate fourth points lower than a fourth determined value, a candidate fourth point being a fourth point when the number of fifth points is greater than a sixth determined value.

13. The device according to one of claims 11 and 12, wherein said attributes are modified based on the attributes of said at least one fourth point.

14. The device according to one of claims 9 to 13, wherein the at least a processor is further configured to add said at least a first point having modified attributes to a list of points having attributes usable to modify attributes of a further point of said 3D scene identified as having depth information inconsistent with regard to depth information associated with its neighborhood in said depth image.

15. The device according to one of claims 9 to 14, wherein the at least a processor is further configured to decode said depth image and said texture image from a received bitstream.
